# EUROPEAN PATENT SPECIFICATION

(11) **EP 3 258 090 B1**
(45) Date of publication and mention of the grant of the patent: **18.03.2020**
(21) Application number: 17176451.7
(22) Date of filing: 16.06.2017
(51) Int. Cl.: F02D 41/14, F02D 41/22, F02B 63/04, F02D 29/06, H02P 9/04

(54) **GENERATOR HAVING CONFINED SPACE SHUTDOWN**
GENERATOR MIT ABSCHALTUNG IN GESCHLOSSENEM RAUM
GÉNÉRATRICE À ARRÊT EN ESPACE CONFINÉ

(30) Priority: 17.06.2016 US 201662351903 P
(43) Date of publication of application: 20.12.2017
(73) Proprietor: TTI (Macao Commercial Offshore) Limited, Macao (MO)
(72) Inventor: Tedder, Brent, Anderson, SC 29625 (US); Earl, III, John E., Anderson, SC 29625 (US)
(74) Representative: Stevenson-Hill, Jack Patrick

(56) References cited:
- WO-A1-2012/016155
- DE-A1- 19 753 733
- DE-A1-102007 057 216
- US-A- 5 205 253
- US-A- 5 977 647
- US-A1- 2008 182 215
- US-A1- 2011 062 725
- US-A1- 2011 260 473

## Description

### FIELD OF THE INVENTION

The present invention relates to generators and, in particular, shutting down generators in a confined space.

### BACKGROUND

US5977647 relates to an automatic pretrip for engine powered generator. According to the abstract of this document there is provided a method and apparatus for making a pretrip diagnosis and identification of generator set problems which could cause shutdown or undesired operation of the generator set.

DE102007057216 relates to a remote control system for the remotely controlled starting of a drive motor of a vehicle and corresponding method. According to a machine translation of the abstract of this document there is provided a system for a vehicle, in particular for a land vehicle or watercraft, having a drive motor for driving the vehicle and a wireless remote control device which at least for starting the drive motor is provided. A control device is provided, which is adapted to receive at least one of the remote control device for starting the drive motor generated signal and on the basis of the received signal to cause the starting of the drive motor. According to the invention, it is provided that the control device is capable, on receipt of the signal, of making a single or repeated determination as to whether the vehicle is in an at least partially closed space and, depending on a determination result, starting the engine to prevent drive motor or shut off the drive motor after successful starting. Furthermore, the invention relates to a method for controlling such a system.

US2011/260473 relates to a method for standby generator restart after fault shut-down. According to the abstract of this document there is provided a standby generator that includes a control unit that allows the standby generator to be automatically restarted upon termination of the generator operation due to a fault condition. The control unit of the standby generator monitors various conditions of the standby generator and terminates operation of the standby generator upon detection of any one of a plurality of fault conditions. After the generator operation has been terminated, the control unit determines whether the fault condition is one of a series of fault conditions that allows automatic restarting. If the fault condition allows for automatic restarting, the control unit monitors the status of the generator and will automatically restart the generator after removal of the fault condition.

WO2012/016155 relates to a safety module for an engine control system. According to the abstract of this document there is provided a safety and input/output (I/O) module of an engine controller for an engine set of a marine vessel can be physically distinct from an engine control unit (ECU). The safety and I/O module can include hardware in addition to software, firmware, or a combination thereof. The safety and I/O module can be a single logic controller having safety functionality and I/O functionality. The safety functionality can be for dynamic engine protection during operation of the engine set of the marine vessel. The I/O functionality can be for sending signals to components external to the engine controller and for receiving signals from components external to the engine controller.

US2008/182215 relates to a system and method for controlling toxic gas. According to the abstract of this document there is provided a safety system for connection to a toxic gas detector and a toxic gas producing engine, and its operating method, includes an interrupt device coupled to connections to the detector and the engine. The interrupt device includes a toxic gas signal detecting circuit and a circuit for permitting starting of the engine. The detecting circuit activates the permitting circuit if the toxic gas signal represents a toxic gas concentration below a predetermined level. In one embodiment, the permitting circuit is activated if the safety system is healthy and fully functional. Similarly, a safety system for connection to a toxic gas detector and a toxic gas supply, and its operating method, includes an interrupt device coupled to connections to the detector and the toxic gas supply. The interrupt device includes a toxic gas signal detecting circuit and a circuit for permitting of flow from the toxic gas supply. The detecting circuit activates the permitting circuit if the toxic gas signal represents a toxic gas concentration below a predetermined level.

US2011/062725 relates to a generator and carbon monoxide detector. According to the abstract of this document there is provided a generator system and method. The generator system includes an internal combustion engine coupled to a generator. The internal combustion engine produces exhaust gases when operating. The system further includes a gas detector positioned in an enclosure into which exhaust gas may move. The detector is coupled to a signal transmitter that is operable to send a signal if a predetermined level of a selected gas or compound is sensed. The signal is received by an engine shut down device that is operable to shut down engine operation after the signal is received.

### SUMMARY

Existing methods of determining when a generator is in a confined area approximate an oxygen level at an intake of the engine of the generator. Such methods can be unreliable, and may cause shutdown of the generator when the generator is not in a confined space or may not detect a problem until it is too late.

In one embodiment, a generator is provided that includes an internal combustion engine. The generator further includes an alternator having a rotor driven by the internal combustion engine and a stator in which alternator output power is induced when the rotor is driven. The generator further includes a power outlet coupled to the alternator to provide power to a device coupled to the power outlet. The generator further includes an electronic processor communicatively coupled to the engine and configured to determine when the generator is operating in a confined space and to shut down the generator. The electronic processor is configured to obtain an engine speed of the engine, and (i) determine that the engine speed is below an engine speed threshold for a predetermined period of time or (ii) determine that the engine speed has decreased below an engine speed threshold a predetermined number of times within a predetermined period of time. The electronic processor is further configured to determine, in response to (i) determining that the engine speed is below the engine speed threshold for the predetermined period of time, or (ii) in response to determining that the engine speed has decreased below the engine speed threshold the predetermined number of times within the predetermined period of time; that a predetermined number of a plurality of secondary parameters of the generator have crossed respective secondary thresholds. The electronic processor is further configured to shut down the generator in response to determining that the predetermined number of the secondary parameters have crossed the respective secondary thresholds.

In another embodiment, a method of shutting down a generator is provided. The method comprises determining that the generator is operating in a confined space, and in response to said determining that the generator is operating in a confined space shutting down the generator. Determining that the generator is operating in a confined space comprises obtaining, with an electronic processor, a value of a plurality of parameters of the generator and an engine speed of an internal combustion engine comprised in the generator. The method further includes determining, with the electronic processor, that (i) the engine speed is below an engine speed threshold for a predetermined period of time, or that (ii) the engine speed has decreased below an engine speed threshold a predetermined number of times within a predetermined period of time. The method further includes determining, with the electronic processor, (i) in response to determining that the engine speed is below the engine speed threshold for the predetermined period of time, or (ii) in response to determining that the engine speed has decreased below the engine speed threshold the predetermined number of times within the predetermined period of time; that a predetermined number of the values of the plurality of parameters have crossed respective thresholds. The method further includes shutting down the generator with the electronic processor in response to determining that the predetermined number of the values of the plurality of parameters have crossed the respective thresholds.

Optional features of the above-discussed embodiments are set out in dependent claims.

Other features and aspects of the invention will become apparent by consideration of the following detailed description and accompanying drawings.

### BRIEF DESCRIPTION OF THE DRAWINGS

FIG. 1A is perspective view of a generator according to one embodiment of the invention.
FIG. 1B is a block diagram of the generator of FIG. 1A according to one embodiment of the invention.
FIG. 2 is a block diagram of a controller included in the generator of FIGS. 1A and 1B according to one embodiment of the invention.
FIG. 3 is a flowchart of an example method executed by a processor of the generator of FIGS. 1A and 1B to determine whether the generator is operating in a confined space according to one embodiment of the invention.
FIG. 4 is a flowchart of another example method executed by a processor of the generator of FIGS. 1A and 1B to determine whether the generator is operating in a confined space according to one embodiment of the invention.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting and coupling. Further, "connected" and "coupled" are not restricted to physical or mechanical connections or couplings, and can include electrical connections or couplings, whether direct or indirect.

It should be noted that a plurality of hardware and software based devices, as well as a plurality of different structural components may be utilized to implement the invention. Furthermore, and as described in subsequent paragraphs, the specific configurations illustrated in the drawings are intended to exemplify embodiments of the invention and that other alternative configurations are possible. The terms "processor", "central processing unit" and "CPU" are interchangeable unless otherwise stated. Where the terms "processor" or "central processing unit" or "CPU" are used as identifying a unit performing specific functions, it should be understood that, unless otherwise stated, those functions can be carried out by a single processor, or multiple processors arranged in any form, including parallel processors, serial processors, tandem processors or cloud processing/cloud computing configurations.

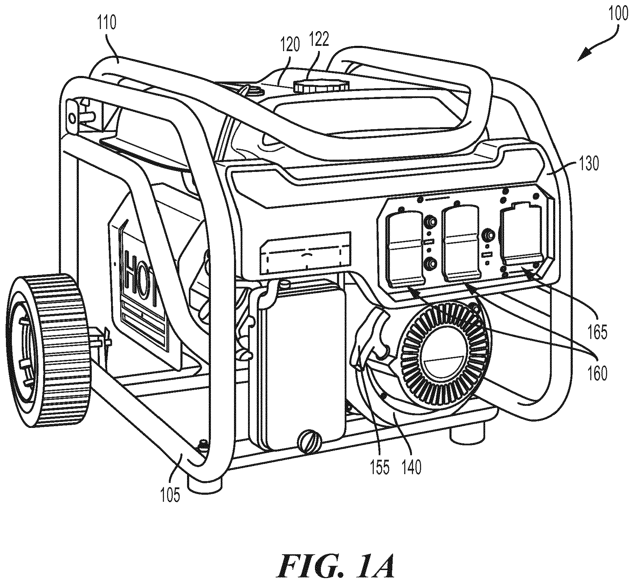

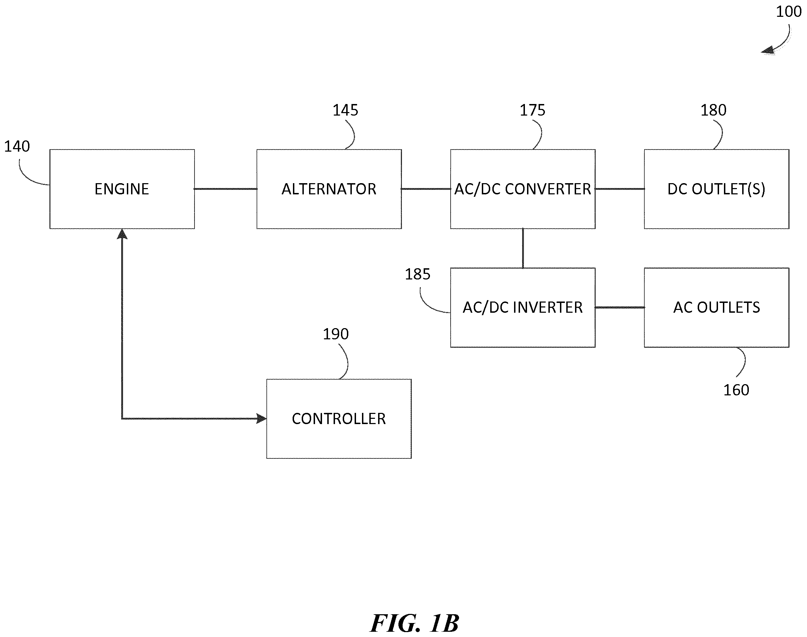

FIG. 1A is a perspective view of a generator 100 according to one embodiment and FIG. 1B is a block diagram of the generator 100 according to one embodiment. As shown in FIG. 1A, the generator 100 includes a frame 105 having a folding handle 110. The generator 100 further includes a fuel tank 120 with a fuel cap 122, a main panel 130, an internal combustion engine 140, and an alternator 145. Although not shown, in some instances, two or more wheels are secured to the bottom of the frame 105 to ease in the transport of the generator 100. The generator 100 further includes a pull starter cord 155 to optionally start the engine 140. In some embodiments, the generator 100 includes a fuel valve to open/close a fuel supply line connecting the fuel tank 120 to the engine 140.

The main panel 130 is positioned adjacent to the fuel tank 120 and above the engine 140. In the illustrated embodiment, the main panel 130 includes power outlets, for example four alternating current (AC) outlets 160, each having terminals for connecting to a three prong plug of an AC load. The AC outlets 160 are ground fault circuit interrupter (GFCI) outlets, although other outlet types may be included. The main panel 130 further includes a 120/240 Volt AC outlet 165. The AC outlets 160 and 165 are protected from water and contaminant (e.g., dust) infiltration via covers, which may be made of rubber or another suitable material. In some embodiments, DC outlets 180 are also provided on the main panel 130 or elsewhere on the generator 100.

As shown in FIG. 1B, the engine 140 is coupled to the alternator 145 (for example, an output shaft of the engine 140 rotates a rotor of the alternator 145). The rotating rotor of the alternator 145 induces an AC output from a stator of the alternator 145. The alternator 145 is coupled to an AC/DC converter 175 and provides the AC output to the AC/DC converter 175. The AC/DC converter 175 converts the AC output to a DC output and may additionally condition the received AC output to provide a regulated, consistent output. In some embodiments, the AC/DC converter 175 provides the DC output to one or more DC outlets 180 that can provide DC power to a device coupled to the DC outlet 180. In some embodiments, the AC/DC converter 175 provides the DC output to an AC/DC inverter 185. The AC/DC inverter 185 converts the DC output to a conditioned AC output. The AC/DC inverter 185 provides the conditioned AC output to one or more of the AC outlets 160 such that the AC outlets 160 provide, for example, approximately 120V/60Hz or 240V/50Hz to devices coupled to the AC outlets 160.

The block diagram of FIG. 1B also illustrates a controller 190 communicatively coupled to the engine 140. In some embodiments, the controller 190 monitors a speed of the engine 140 and controls the speed of the engine 140. For example, the controller 190 may adjust a throttle of the engine 140 to control a speed of the engine 140. In some embodiments, the controller 190 controls the throttle by sending control signals to a stepper motor or other device that receives the control signals and provides mechanical control of the throttle. Although electronic control of the engine speed is described above, in some embodiments, the engine speed is controlled through a mechanical control system. In addition to or as a part of the throttle control, the controller 190 is configured to disable or shut down the engine 140 via the communicative coupling to the engine 140. The block diagram of FIG. 1B is merely an example. In some embodiments, the generator 100 may include additional or fewer components in configurations different from that illustrated in FIG. 1B. In some embodiments, the controller 190 may also be communicatively coupled to other components of the generator 100 including, for example, the AC/DC inverter 185. For example, the controller 190 may provide switch control signals to control a switching bridge used to invert the DC signal.

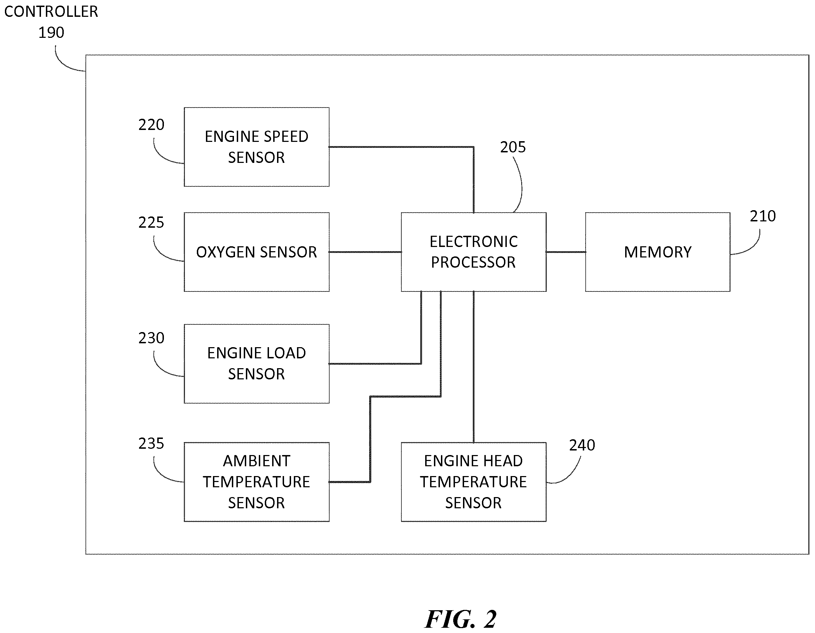

FIG. 2 is a block diagram of the controller 190 according to one embodiment. The block diagram of FIG. 2 is merely an example. In some embodiments, the controller 190 may include additional or fewer components in configurations different from that illustrated in FIG. 2. The controller 190 includes an electronic fuel injection (EFI) system, which monitors various parameters of the generator 100. In the illustrated embodiment, the generator 100 utilizes sensors of the EFI system to detect whether the generator 100 is operating in a confined space. If the generator 100 is operating in a confined space, the generator 100 will shut itself down (i.e., the controller 190 will shut down the engine 140 by, for example, cutting off air or fuel to the engine 140). A generator that evaluates oxygen levels or engine speed alone to determine whether a low oxygen level exists (e.g., the generator is in a confined space) may not detect a problem in a timely manner. In the illustrated embodiment, the controller 190 monitors a variety of parameters as well as rates of change and trends of change in certain parameters. For example, when an oxygen negative correction value (as explained in greater detail below) quickly and consistently moves in a negative direction, the controller 190 determines a low oxygen condition exists and can shut down the engine 140. As another example, when ambient temperature increases at a rapid rate, the controller 190 may determine a low oxygen condition exists. Technologies described herein provide a more accurate and timely detection of the generator 100 operating in a confined space.

As shown in FIG. 2, the controller 190 includes an electronic processor 205 and a memory 210. The memory 210 includes read only memory (ROM), random access memory (RAM), other non-transitory computer-readable media, or a combination thereof. The electronic processor 205 is configured to receive instructions and data from the memory 210 and execute, among other things, the instructions. In particular, the electronic processor 205 executes instructions stored in the memory 210 to perform the methods described herein. The electronic processor 205 controls and is coupled to the engine 140 as indicated by FIG. 1B and as explained previously.

In the illustrated embodiment, the controller 190 includes a variety of sensors, such as an engine speed sensor 220, an oxygen sensor 225, an engine load sensor 230, an ambient temperature sensor 235, and an engine head temperature sensor 240. The sensors 220, 225, 230, 235, and 240 monitor parameters of the generator 100 and of the environment surrounding the generator 100 during operation of the generator 100. For example, the engine speed sensor 220 monitors rotational speed of the engine 140. The oxygen sensor 225 monitors the oxygen in an exhaust stream of the engine 140. The engine load sensor 230 monitors a manifold pressure of the engine 140. The ambient temperature sensor 235 measures an ambient temperature of the manifold of the engine 140. In alternate embodiments, the ambient temperature sensor 235 monitors an ambient temperature of the environment surrounding the generator 100. The engine head temperature sensor 240 measures the temperature at the engine head. As shown in FIG. 2, the sensors 220, 225, 230, 235, and 240 are coupled to the electronic processor 205.

The electronic processor 205 receives signals from at least one of the sensors 220, 225, 230, 235, and 240 and monitors the operation of the generator 100 based on the received signals. For example, the electronic processor 205 may determine operating parameters of the generator 100 based on at least one of the received signals. The electronic processor 205 may also compare these parameters to respective thresholds for each parameter to determine when each parameter increases or decreases beyond its respective threshold. For example, Table 1 illustrates six example parameters that may be monitored by the electronic processor 205 using the sensors 220, 225, 230, 235, and 240.

**Table 1**

| | **Parameter** | **Unit** |
|---|---|---|
| **First Category** | (1) Engine speed | Rotations per minute (RPM) |
| | (2) Amount of time that engine speed has been below the engine speed threshold | Seconds |
| **Second Category** | (3) Oxygen negative correction value | Percent |
| | (4) Oxygen negative correction rate of change | Percent per second |
| | (5) Manifold pressure (i.e., engine load) | Kilopascals |
| | (6) Temperature | Degrees Celsius |

The electronic processor 205 monitors engine speed (i.e., parameter 1) by evaluating a signal received from the engine speed sensor 220. The electronic processor 205 determines whether the engine speed is below an engine speed threshold (e.g., 2440 RPM). The electronic processor 205 also determines the amount of time that the engine speed has been below the engine speed threshold (i.e., parameter 2). Furthermore, the electronic processor 205 determines whether this amount of time exceeds a predetermined period of time (e.g., sixty seconds). In further embodiments, the electronic processor 205 evaluates how many times the engine speed falls below the engine speed threshold (i.e., crosses over the threshold) within the predetermined period of time.

With respect to oxygen negative correction value (i.e., parameter 3), in some embodiments, the electronic processor 205 controls the engine 140 to run at a preset air fuel ratio. The oxygen sensor 225 monitors the excess oxygen in the exhaust stream of the engine 140 and provides a signal to the electronic processor 205 indicative of the oxygen level. The electronic processor 205 then makes adjustments to attempt to achieve the preset air fuel ratio. For example, the electronic processor 205 may adjust a fuel injector pulse width or may adjust a fuel pressure of the engine 140. These adjustments are referred to as the oxygen negative correction value (i.e., parameter 3) and correspond to the oxygen level in the engine 140. In some embodiments, the electronic processor 205 determines whether the oxygen negative correction value has reached its maximum negative value (e.g., -15%, -25%, -32%, -45.7%, etc.). These maximum negative values are merely examples and may be different depending on the engine 140 included in the generator 100 (e.g., higher than -15% or lower than -45.7% for some engines).

In some embodiments, the electronic processor 205 monitors an oxygen negative correction rate of change (i.e. parameter 4). The oxygen negative correction rate of change is the rate of change of the oxygen negative correction value (i.e., parameter 3) over a predetermined period of time. In some embodiments, the predetermined period of time is the same as the predetermined period of time described above with respect to parameter 2. In other embodiments, the predetermined period of time is different than the predetermined period of time described above with respect to parameter 2. The electronic processor 205 determines whether the oxygen negative correction rate of change (i.e., parameter 4) decreases below its respective threshold (e.g., -0.12336% per second).

In some embodiments, the electronic processor 205 also monitors a manifold pressure of the engine 140 (i.e., parameter 5), which may also be referred to as engine load, by evaluating a signal received from the engine load sensor 230. The electronic processor 205 determines whether the manifold pressure of the engine 140 exceeds an engine load threshold (e.g., 780 kilopascals).

In some embodiments, the electronic processor 205 also monitors an ambient temperature of the manifold of the engine 140 (i.e., parameter 6) by evaluating a signal received from the ambient temperature sensor 235. The electronic processor 205 determines whether the temperature exceeds a temperature threshold (e.g., fifty degrees Celsius). In some embodiments, the electronic processor 205 additionally or alternatively monitors a temperature at the engine head by evaluating a signal received from the engine head temperature sensor 240. In such embodiments, the electronic processor 205 determines whether the engine head temperature exceeds an engine head temperature threshold.

In some embodiments, the electronic processor 205 stores received signals from the sensors 220, 225, 230, 235, and 240 in the memory 210 for comparison to later-received signals. In such embodiments, the electronic processor 205 compares stored received signals to later-received signals to determine a rate of change of a parameter, for example as previously explained with respect to the oxygen negative correction rate of change (i.e., parameter 4). In some embodiments, the electronic processor 205 also determines the rate of change of the engine speed or the temperature over a time period and determines whether such rates of change exceed a predetermined rate of change threshold for each parameter. Furthermore, the parameters shown in Table 1 are merely examples and additional or fewer parameters may be monitored by the electronic processor 205 and compared to respective predetermined thresholds. Additionally, the values provided for the predetermined thresholds above are merely examples and may be higher or lower depending on the type of engine used in the generator 100. For example, the values of such predetermined thresholds can be adjusted during manufacturing to be compatible with different types of engines. In other words, through testing, the predetermined thresholds for each parameter of a certain engine may be determined such that shut down of the generator in a confined space occurs as desired.

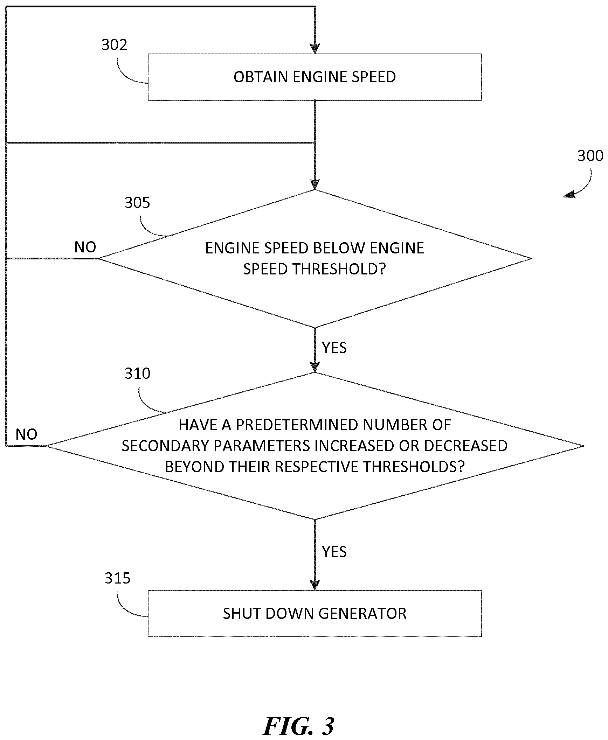

As described in more detail with respect to FIG. 3 below, the electronic processor 205 determines that the generator 100 is operating in a confined space when the electronic processor 205 determines that one or more parameters have crossed their respective thresholds.

FIG. 3 is a flowchart of an example method 300 executed by the electronic processor 205 to determine whether the generator 100 is operating in a confined space. In executing the method 300 to determine whether the generator 100 is operating in a confined space, the electronic processor 205 evaluates multiple parameters against a respective threshold for each parameter as described above. As shown in Table 1, in some embodiments, a first set of parameters is categorized into a first category and may be referred to as primary parameters. A second set of parameters is categorized into a second category and may be referred to as secondary parameters. In some embodiments, the electronic processor 205 determines that the generator 100 is operating in a confined space and stops operation of the generator 100 when a predetermined number of predetermined thresholds of the respective parameters in each category are met. Additionally, in some embodiments, a predetermined number of predetermined thresholds of the parameters in the first category must be met to trigger an evaluation of the parameters in the second category. In some embodiments, additional sets of parameters are included in additional categories (e.g., a third category or a fourth category). In such embodiments, the parameters may be grouped into other categories (e.g., the temperature may be included in the third category instead of the second category). In some embodiments, a predetermined number of predetermined thresholds of the parameters in the prior categories (e.g., the respective first and second categories) must be met to trigger an evaluation of the parameters in a latter category (e.g., the third category). As explained in greater detail below, in some embodiments, the parameters may be grouped into a single category.

As illustrated in FIG. 3, at block 302, the electronic processor 205 obtains the engine speed of the engine 140 (for example, by receiving a signal from the engine speed sensor 220). At block 305, the electronic processor 205 evaluates the primary parameters (e.g., parameters 1 and 2 of Table 1) and compares the primary parameters to the respective thresholds. In other words, at block 305, the electronic processor 205 determines whether the engine speed is below the engine speed threshold. For example, the electronic processor 205 may determine whether the engine speed is below the engine speed threshold for a predetermined period of time. As another example, the electronic processor 205 may determine whether the engine speed has decreased below the engine speed threshold a predetermined number of times (e.g., ten times) within the predetermined period of time. In this example, the electronic processor 205 is able to determine that the engine speed is fluctuating near the engine speed threshold when the engine speed may not remain below the engine speed threshold for the predetermined period of time. With respect to this example, the value of ten times for the engine speed to decrease below the engine speed threshold is merely an example and may be higher or lower depending the type of engine used in the generator 100 and the desired operation of the generator 100. For example, the values of such a threshold can be adjusted during manufacturing to be compatible with different types of engines. In some embodiments, the engine speed threshold is an engine speed delta from a given point. In other words, in some embodiments, the engine speed threshold may be a dynamic value based on historical speeds of the engine 140 instead of a static speed value. For example, the engine speed threshold may be one hundred RPM less than an average speed of the engine 140 over the previous five minutes. When the engine speed is not below the engine speed threshold, the method 300 proceeds back to block 302 to obtain the engine speed and the electronic processor 205 continues to evaluate the parameters of the first category. On the other hand, when the engine speed is below the engine speed threshold, at block 305, the electronic processor 205 determines that the engine speed is below the engine speed threshold and the method 300 proceeds to block 310.

In response to determining that the engine speed is below the engine speed threshold (at block 305), at block 310, the electronic processor 205 evaluates the secondary parameters (e.g., parameters 3-6 of Table 1) and compares the secondary parameters to the respective thresholds as explained previously herein. As shown in FIG. 3, at block 310, the electronic processor 205 determines whether a predetermined number of secondary parameters have crossed the respective secondary thresholds. For example, in some embodiments, three or more of the four secondary parameters must cross the respective secondary thresholds for the electronic processor 205 to determine that the generator 100 is in a confined space. In this example, when the electronic processor 205 determines that three or more of the four secondary parameters have crossed the respective secondary thresholds (at block 310), at block 315, the electronic processor 205 shuts down the generator 100. On the other hand, when the electronic processor 205 determines that the predetermined number of secondary parameters have not crossed the respective secondary thresholds, the method 300 proceeds back to block 302 and then to block 305. The above explanation is merely an example. At block 305, if the engine speed has not increased above the engine speed threshold, the method 300 will proceed back to block 310 to continue to evaluate the secondary parameters. Thus, in some embodiments, the electronic processor 205 will continue to evaluate the secondary parameters until the engine speed increases above the engine speed threshold or until the electronic processor 205 determines that the generator 100 is in a confined space.

As explained above, when executing the method 300, the electronic processor 205 does not shut down the generator 100 based on the secondary parameters (see Table 1) until the primary parameters have crossed the respective thresholds (i.e., until the engine speed decreases below the engine speed threshold). However, in some embodiments, the electronic processor 205 may nonetheless monitor the secondary parameters whenever the generator 100 is operating (e.g., to store received signals from the sensors 220, 225, 230, 235, and 240 to be used in rate of change determinations as described above).

Additionally, with respect to the above description of block 310, the number of parameters that must exceed the respective thresholds to indicate that the generator 100 is in a confined space is merely an example. In some embodiments, a different number of parameters may be used. For example, the electronic processor 205 may determine that the generator 100 is in a confined space and shut down the generator 100 in response to at least one of the secondary parameters crossing its respective threshold. In some embodiments, the electronic processor 205 may determine that the generator 100 is in a confined space and shut down the generator 100 in response to all of the secondary parameters crossing their respective thresholds. As another example, the electronic processor 205 may determine that the generator 100 is in a confined space and shut down the generator 100 in response to a predetermined percentage of the secondary parameters crossing their respective thresholds (for example, 25%, 33%, 50%, 66%, 75%, and the like). Similar alternatives are possible for the primary parameters as well. For example, at block 305, the method 300 may proceed to block 310 to evaluate the secondary parameters in response to at least one of the primary parameters being determined to cross the respective thresholds. Furthermore, in some embodiments, one or more of the primary parameters in Table 1 may be secondary parameters, and vice versa.

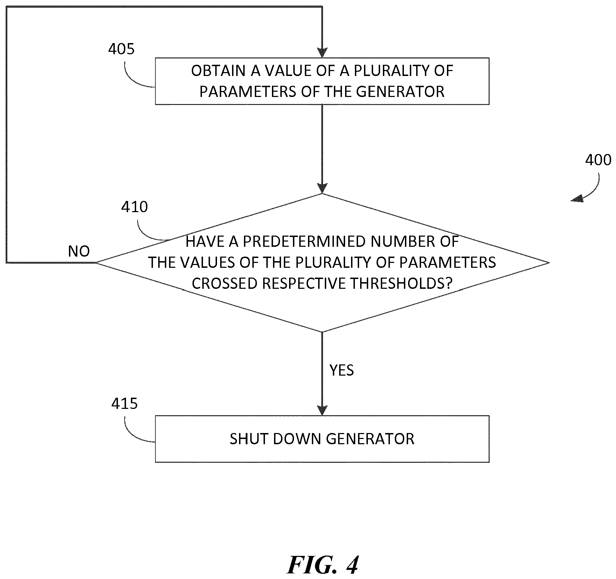

FIG. 4 is a flowchart of another example method 400 executed by the electronic processor 205 to determine whether the generator 100 is operating in a confined space. As mentioned above, in some embodiments, the parameters may be grouped into a single category. In such embodiments, at block 405, the electronic processor 205 obtains a value of a plurality of parameters of the generator 100 (e.g., from the sensors 220, 225, 230, 235, and 240 as explained previously). At block 410, the electronic processor 205 determines that a predetermined number of the values of the plurality of parameters have crossed respective thresholds (e.g., as explained previously with respect to other embodiments). For example, the predetermined number may correspond to 50%, 75%, 80%, etc. of the parameters being monitored. In response to determining that the predetermined number of the values of the plurality of parameters have crossed the respective thresholds, at block 415, the electronic processor 205 shuts down the generator 100. The plurality of parameters includes an engine speed that is compared to an engine speed threshold. One of the parameters that is determined to cross its respective threshold is the engine speed (i.e., the engine speed is determined to have decreased below the engine speed threshold). In another example outside of the scope of the claimed invention, the electronic processor 205 may shut down the generator 100 when the engine speed has not decreased below an engine speed threshold. In other words, in such an example, the electronic processor 205 may determine that a predetermined number of the values of the plurality of parameters have crossed respective thresholds and shut down the generator 100 when engine speed has not decreased below an engine speed threshold. For example, the predetermined number may be three parameters, and the electronic processor 205 may shut down the generator 100 in response to determining that oxygen negative correction value, manifold pressure, and temperature (i.e., parameters 3, 5, and 6) have crossed their respective thresholds.

Thus, the methods 300 and 400 allow the electronic processor 205 to evaluate monitored parameters of the generator 100 to predict when the generator 100 is in a confined space.

In alternate embodiments, the generator 100 is an idle down or variable speed generator. In such embodiments, the thresholds relating to rates of change of parameters (e.g., the threshold of parameter 4 described above) may be dependent on the engine speed of the generator 100. For example, in some embodiments, the memory 210 includes a look-up table for the electronic processor 205 to reference to determine a threshold for the rate of change of one or more parameters based on the engine speed of the generator 100. For example, with reference to the method 300, after block 305, the electronic processor 205 may use the determined engine speed to retrieve associated thresholds for one or more of the secondary parameters, which are then used as the thresholds in the determination of block 310.

Although the invention has been described in detail with reference to certain preferred embodiments, variations and modifications exist within the scope of the appended claims.

## Claims

1. A generator comprising:
an internal combustion engine;
an alternator having a rotor driven by the internal combustion engine and a stator in which alternator output power is induced when the rotor is driven;
a power outlet coupled to the alternator to provide power to a device coupled to the power outlet; and
an electronic processor communicatively coupled to the engine and configured to determine when the generator is operating in a confined space and to shut down the generator by
obtaining an engine speed of the engine,
determining that the engine speed is below an engine speed threshold for a predetermined period of time, or determining that the engine speed has decreased below an engine speed threshold a predetermined number of times within a predetermined period of time,
determining, in response to determining that the engine speed is below the engine speed threshold for the predetermined period of time, or in response to determining that the engine speed has decreased below the engine speed threshold the predetermined number of times within the predetermined period of time, that a predetermined number of a plurality of secondary parameters of the generator have crossed respective secondary thresholds, and
shutting down the generator in response to determining that the predetermined number of the secondary parameters have crossed the respective secondary thresholds.

2. The generator of claim 1, wherein the electronic processor is further configured to determine that at least half of the secondary parameters of the plurality of secondary parameters have crossed the respective secondary thresholds.

3. The generator of claim 1, wherein the electronic processor is further configured to determine the respective secondary threshold relating to the secondary parameter based on the engine speed.

4. The generator of any preceding claim, wherein the secondary parameters include at least one parameter selected from the group consisting of:
an oxygen negative correction value,
an oxygen negative correction rate of change,
a temperature, and
a parameter relating to a rate of change of the secondary parameters over a predetermined period of time.

5. The generator of claim 4, wherein the secondary parameters further include a manifold pressure.

6. The generator of any preceding claim, wherein the predetermined number is one such that the electronic processor is configured to determine that the predetermined number of the plurality of secondary parameters of the generator have crossed the respective secondary thresholds in response to the electronic processor determining that a single secondary parameter of the plurality of secondary parameters has crossed its respective secondary threshold.

7. The generator of any preceding claim, wherein the generator is a variable speed generator.

8. A method of shutting down a generator, comprising determining that the generator is operating in a confined space, and in response to said determining that the generator is operating in a confined space shutting down the generator, wherein determining that the generator is operating in a confined space comprises:
obtaining, with an electronic processor, a value of a plurality of parameters of the generator and an engine speed of an internal combustion engine comprised in the generator;
determining, with the electronic processor, that the engine speed is below an engine speed threshold for a predetermined period of time, or that the engine speed has decreased below an engine speed threshold a predetermined number of times within a predetermined period of time;
determining, with the electronic processor, in response to determining that the engine speed is below the engine speed threshold for the predetermined period of time, or in response to determining that the engine speed has decreased below the engine speed threshold the predetermined number of times within the predetermined period of time, that a predetermined number of the values of the plurality of parameters have crossed respective thresholds; and
shutting down the generator with the electronic processor in response to determining that the predetermined number of the values of the plurality of parameters have crossed the respective thresholds.

9. The method of claim 8, wherein the plurality of parameters include at least two selected from the group consisting of an oxygen negative correction value, an oxygen negative correction rate of change, a manifold pressure, and a temperature.

10. The method of claim 8 or claim 9, wherein the plurality of parameters include a parameter relating to a rate of change of values of the plurality of parameters over a predetermined period time.

11. The method of any one of claims 8 to 10, wherein determining that the predetermined number of the plurality of parameters of the generator have crossed the respective thresholds includes determining that at least half of the parameters of the plurality of parameters have crossed the respective thresholds.

12. The method of any one of claims 8 to 11, further comprising determining, with the electronic processor, the respective threshold relating to the parameter based on the engine speed of the engine of the generator.

13. The method of any one of claims 8 to 12, wherein the generator is a variable speed generator.

14. The method of any one of claims 7 to 13, wherein the predetermined number is one such that the electronic processor is configured to determine that the predetermined number of the plurality of parameters of the generator have crossed the respective thresholds in response to the electronic processor determining that a single parameter of the plurality of parameters has crossed its respective threshold.

## Patentansprüche

1. Generator, umfassend:
einen internen Verbrennungsmotor;
einen Wechselstromgenerator, welcher einen Rotor, der durch den internen Verbrennungsmotor angetrieben wird, und einen Stator aufweist, in welchem eine Wechselstromgeneratorleistung induziert wird, wenn der Rotor angetrieben wird;
eine Steckdose, welche mit dem Wechselstromgenerator gekoppelt ist, um eine mit der Steckdose gekoppelte Vorrichtung mit Strom zu versorgen; und
einen elektronischen Prozessor, welcher kommunikativ mit dem Motor gekoppelt ist und konfiguriert ist, um zu bestimmen, wann der Generator innerhalb eines geschlossenen Raums betrieben wird und um den Generator abzuschalten, durch
Erhalten einer Motorgeschwindigkeit des Motors,
Bestimmen, dass die Motorgeschwindigkeit sich unterhalb einer Motorgeschwindigkeitsschwelle für eine vorbestimmte Zeitspanne befindet, oder Bestimmen, dass die Motorgeschwindigkeit eine Motorgeschwindigkeitsschwelle eine vorbestimmte Anzahl von Malen für eine vorbestimmte Zeitspanne unterschritten hat,
Bestimmen, als Reaktion auf das Bestimmen, dass die Motorgeschwindigkeit sich unterhalb der Motorgeschwindigkeitsschwelle für die vorbestimmte Zeitspanne befindet, oder als Reaktion auf das Bestimmen, dass die Motorgeschwindigkeit die Motorgeschwindigkeitsschwelle die vorbestimmte Anzahl von Malen innerhalb der vorbestimmten Zeitspanne unterschritten hat, dass eine vorbestimmte Anzahl aus einer Mehrzahl von Sekundärparametern des Generators entsprechende Sekundärschwellen überquert hat, und
Abschalten des Generators, als Reaktion auf das Bestimmen, dass die vorbestimmte Anzahl von Sekundärparametern die entsprechenden Sekundärschwellen überquert hat.

2. Generator nach Anspruch 1, wobei der elektronische Prozessor ferner konfiguriert ist, um zu bestimmen, dass mindestens die Hälfte der Sekundärparameter aus der Mehrzahl von Sekundärparametern die entsprechenden Sekundärschwellen überquert hat.

3. Generator nach Anspruch 1, wobei der elektronische Prozessor ferner konfiguriert ist, um, basierend auf der Motorgeschwindigkeit, die entsprechende Sekundärschwelle zu bestimmen, die sich auf den Sekundärparameter bezieht.

4. Generator nach einem der vorhergehenden Ansprüche, wobei die Sekundärparameter mindestens einen Parameter umfassen, welcher aus der Gruppe ausgewählt ist, bestehend aus:
einem negativen Sauerstoffkorrekturwert;
einer negativen Sauerstoffkorrektur-Änderungsrate,
einer Temperatur, und
einem Parameter, welcher sich auf eine Änderungsrate der Sekundärparameter über eine vorbestimmte Zeitspanne bezieht.

5. Generator nach Anspruch 4, wobei die Sekundärparameter ferner einen Verteilerdruck umfassen.

6. Generator nach einem der vorhergehenden Ansprüche, wobei die vorbestimmte Anzahl eine derartige Anzahl ist, so dass der elektronische Prozessor konfiguriert ist, um zu bestimmen, dass die vorbestimmte Anzahl aus der Mehrzahl von Sekundärparameter des Generators die entsprechenden Sekundärschwellen überquert hat, als Reaktion auf das Bestimmen, durch den Prozessor, dass ein einzelner Sekundärparameter aus der Mehrzahl von Sekundärparametern seine entsprechende Sekundärschwelle überquert hat.

7. Generator nach einem der vorhergehenden Ansprüche, wobei der Generator ein Generator mit variabler Geschwindigkeit ist.

8. Verfahren zum Abschalten eines Generators, umfassend das Bestimmen, dass der Generator innerhalb eines geschlossenen Raums betrieben wird, und, als Reaktion auf das Bestimmen, dass der Generator innerhalb eines geschlossenen Raums betrieben wird, das Abschalten des Generators, wobei das Bestimmen, dass der Generator innerhalb eines geschlossenen Raums betrieben wird, umfasst:
Erhalten, mit einem elektronischen Prozessor, eines Werts aus einer Mehrzahl von Parametern des Generators und einer Motorgeschwindigkeit eines internen Verbrennungsmotors, welcher in dem Generator enthalten ist;
Bestimmen, mit dem elektronischen Prozessor, dass die Motorgeschwindigkeit sich unterhalb einer Motorgeschwindigkeitsschwelle für eine vorbestimmte Zeitspanne befindet oder dass die Motorgeschwindigkeit eine Motorgeschwindigkeitsschwelle eine vorbestimmte Anzahl von Malen innerhalb einer vorbestimmten Zeitspanne unterschritten hat;
Bestimmen, mit dem elektronischen Prozessor, als Reaktion auf das Bestimmen, dass die Motorgeschwindigkeit sich unterhalb der Motorgeschwindigkeitsschwelle für die vorbestimmte Zeitspanne befindet, oder als Reaktion auf das Bestimmen, dass die Motorgeschwindigkeit die Motorgeschwindigkeitsschwelle die vorbestimmte Anzahl von Malen innerhalb der vorbestimmten Zeitspanne unterschritten hat, dass eine vorbestimmte Anzahl der Werte der Mehrzahl von Parametern entsprechende Schwellen überquert hat; und
Abschalten des Generators, mit dem elektronischen Prozessor, als Reaktion auf das Bestimmen, dass die vorbestimmte Anzahl von Werten der Mehrzahl von Parametern die entsprechenden Schwellen überquert hat.

9. Verfahren nach Anspruch 8, wobei die Mehrzahl von Parametern mindestens zwei umfasst, ausgewählt aus der Gruppe bestehend aus einem negativen Sauerstoffkorrekturwert, einer negativen Sauerstoffkorrektur-Änderungsrate, einem Verteilerdruck und einer Temperatur.

10. Verfahren nach Anspruch 8 oder Anspruch 9, wobei die Mehrzahl von Parametern einen Parameter umfasst, welcher sich auf eine Änderungsrate von Werten der Mehrzahl von Parametern über eine vorbestimmte Zeitspanne bezieht.

11. Verfahren nach einem der Ansprüche 8 bis 10, wobei das Bestimmen, dass die vorbestimmte Anzahl aus der Mehrzahl von Parametern des Generators die entsprechenden Schwellen überquert hat, das Bestimmen umfasst, dass mindestens die Hälfte der Parameter aus der Mehrzahl von Parametern die entsprechenden Schwellen überquert hat.

12. Verfahren nach einem der Ansprüche 8 bis 11, ferner umfassend das Bestimmen, mit dem elektronischen Prozessor, der entsprechenden Schwelle, die sich auf den Parameter bezieht, basierend auf der Motorgeschwindigkeit des Motors des Generators.

13. Verfahren nach einem der Ansprüche 8 bis 12, wobei der Generator ein Generator mit variabler Geschwindigkeit ist.

14. Verfahren nach einem der Ansprüche 7 bis 13, wobei die vorbestimmte Anzahl eine derartige Anzahl ist, sodass der elektronische Prozessor konfiguriert ist, um zu bestimmen, dass die vorbestimmte Anzahl aus der Mehrzahl von Parametern des Generators die entsprechenden Schwellen überquert hat, als Reaktion auf das Bestimmen, durch den elektronischen Prozessor, dass ein einzelner Parameter aus der Mehrzahl von Parametern seine entsprechende Schwelle überquert hat.

## Revendications

1. Génératrice comprenant :
un moteur à combustion interne ;
un alternateur qui comporte un rotor qui est entraîné par le moteur à combustion interne et un stator à l'intérieur duquel une puissance de sortie de l'alternateur est induite lorsque le rotor est entraîné ;
une prise de courant qui est couplée à l'alternateur pour alimenter en puissance un dispositif qui est couplé à la prise de courant ; et
un processeur électronique qui est couplé en communication au moteur et qui est configuré pour déterminer quand la génératrice est en train de fonctionner dans un espace confiné et pour arrêter la génératrice au moyen des actions qui suivent :
l'obtention d'une vitesse de moteur du moteur,
la détermination du fait que la vitesse de moteur est en deçà d'un seuil de vitesse de moteur pendant une période temporelle prédéterminée ou la détermination du fait que la vitesse de moteur a diminué en deçà d'un seuil de vitesse de moteur un nombre de fois prédéterminé à l'intérieur d'une période temporelle prédéterminée ;
la détermination, en réponse à la détermination du fait que la vitesse de moteur est en deçà du seuil de vitesse de moteur pendant la période temporelle prédéterminée ou en réponse à la détermination du fait que la vitesse de moteur a diminué en deçà du seuil de vitesse de moteur le nombre de fois prédéterminé à l'intérieur de la période temporelle prédéterminée, du fait qu'un nombre prédéterminé d'une pluralité de paramètres secondaires de la génératrice a croisé des seuils secondaires respectifs, et
l'arrêt de la génératrice en réponse à la détermination du fait que le nombre prédéterminé de paramètres secondaires a croisé les seuils secondaires respectifs.

2. Génératrice selon la revendication 1, dans laquelle le processeur électronique est en outre configuré pour déterminer qu'au moins la moitié des paramètres secondaires de la pluralité de paramètres secondaires ont croisé les seuils secondaires respectifs.

3. Génératrice selon la revendication 1, dans laquelle le processeur électronique est en outre configuré pour déterminer le seuil secondaire respectif qui est rapporté au paramètre secondaire sur la base de la vitesse de moteur.

4. Génératrice selon l'une quelconque des revendications qui précèdent, dans laquelle les paramètres secondaires incluent au moins un paramètre qui est sélectionné parmi le groupe qui est constitué par :
une valeur de correction négative d'oxygène ;
un taux de variation de correction négative d'oxygène ;
une température, et
un paramètre qui est rapporté à un taux de variation des paramètres secondaires sur une période temporelle prédéterminée.

5. Génératrice selon la revendication 4, dans laquelle les paramètres secondaires incluent en outre une pression de collecteur.

6. Génératrice selon l'une quelconque des revendications qui précèdent, dans laquelle le nombre prédéterminé est un nombre qui est tel que le processeur électronique est configuré pour déterminer que le nombre prédéterminé de la pluralité de paramètres secondaires de la génératrice a croisé les seuils secondaires respectifs en réponse au fait que le processeur électronique détermine qu'un unique paramètre secondaire de la pluralité de paramètres secondaires a croisé son seuil secondaire respectif.

7. Génératrice selon l'une quelconque des revendications qui précèdent, dans laquelle la génératrice est une génératrice à vitesse variable.

8. Procédé d'arrêt d'une génératrice comprenant la détermination du fait que la génératrice est en train de fonctionner dans un espace confiné et, en réponse à ladite détermination du fait que la génératrice est en train de fonctionner dans un espace confiné, l'arrêt de la génératrice, dans lequel la détermination du fait que la génératrice est en train de fonctionner dans un espace confiné comprend :
l'obtention, à l'aide d'un processeur électronique, d'une valeur d'une pluralité de paramètres de la génératrice et d'une vitesse de moteur d'un moteur à combustion interne qui est compris dans la génératrice ;
la détermination, à l'aide du processeur électronique, du fait que la vitesse de moteur est en deçà d'un seuil de vitesse de moteur pendant une période temporelle prédéterminée ou du fait que la vitesse de moteur a diminué en deçà d'un seuil de vitesse de moteur un nombre de fois prédéterminé à l'intérieur d'une période temporelle prédéterminée ;
la détermination, à l'aide du processeur électronique, en réponse à la détermination du fait que la vitesse de moteur est en deçà du seuil de vitesse de moteur pendant la période temporelle prédéterminée ou en réponse à la détermination du fait que la vitesse de moteur a diminué en deçà du seuil de vitesse de moteur le nombre de fois prédéterminé à l'intérieur de la période temporelle prédéterminée, du fait que des valeurs selon un nombre prédéterminé des valeurs de la pluralité de paramètres ont croisé des seuils respectifs ; et
l'arrêt de la génératrice à l'aide du processeur électronique en réponse à la détermination du fait que le nombre prédéterminé des valeurs de la pluralité de paramètres a croisé les seuils respectifs.

9. Procédé selon la revendication 8, dans lequel la pluralité de paramètres inclut au moins deux paramètres sélectionnés parmi le groupe qui est constitué par une valeur de correction négative d'oxygène, un taux de variation de correction négative d'oxygène, une pression de collecteur et une température.

10. Procédé selon la revendication 8 ou la revendication 9, dans lequel la pluralité de paramètres inclut un paramètre qui est rapporté à un taux de variation de valeurs de la pluralité de paramètres sur une période temporelle prédéterminée.

11. Procédé selon l'une quelconque des revendications 8 à 10, dans lequel la détermination du fait que le nombre prédéterminé de la pluralité de paramètres de la génératrice a croisé les seuils respectifs inclut la détermination du fait qu'au moins la moitié des paramètres de la pluralité de paramètres ont croisé les seuils respectifs.

12. Procédé selon l'une quelconque des revendications 8 à 11, comprenant en outre la détermination, à l'aide du processeur électronique, du seuil respectif qui est rapporté au paramètre sur la base de la vitesse de moteur du moteur de la génératrice.

13. Procédé selon l'une quelconque des revendications 8 à 12, dans lequel la génératrice est une génératrice à vitesse variable.

14. Procédé selon l'une quelconque des revendications 7 à 13, dans lequel le nombre prédéterminé est un nombre qui est tel que le processeur électronique est configuré pour déterminer que le nombre prédéterminé de la pluralité de paramètres de la génératrice a croisé les seuils respectifs en réponse au fait que le processeur électronique détermine qu'un unique paramètre de la pluralité de paramètres a croisé son seuil respectif.
